# EUROPEAN PATENT SPECIFICATION

(11) **EP 0 686 221 B1**
(45) Date of publication and mention of the grant of the patent: **05.09.2001**
(21) Application number: 94908890.0
(22) Date of filing: 23.02.1994
(51) Int. Cl.: E04B 1/72, A01M 1/24

(54) **IMPROVEMENTS RELATING TO TERMITE CONTROL**
VERBESSERUNGEN BEZÜGLICH DER TERMITENBEKÄMPFUNG
AMELIORATIONS RELATIVES A LA LUTTE CONTRE LES TERMITES

(30) Priority: 25.02.1993 AU PL752093
(43) Date of publication of application: 13.12.1995
(73) Proprietor: TERMI-MESH AUSTRALIA PTY. LTD., Malaga, W.A. 6062 (AU)
(72) Inventor: TOUTOUNTZIS, Vasilios, Sorrento, W.A. 6020 (AU)
(74) Representative: Newby, Martin John
(86) International application number: AU9400082
(87) International publication number: WO9419554

(56) References cited:
- EP-A- 0 277 334
- EP-A- 0 521 570
- AU-A- 6 201 090
- DE-C- 673 565
- US-A- 2 581 521
- US-A- 5 224 288
- CAHIERS DU CENTRE SCIENTIFIQUE ET TECHNIQUE DU B TIMENT, vol. 100, no. 10, 10 March 1951, PARIS, FRANCE, XP002010625 "les termites et la protection des constructions"

## Description

This invention relates to the control of termites from attacking buildings and other structures and, more specifically, to an improvement in or modification of the techniques for the control of termites in such situations as disclosed in Australian Patent Specification AU-B-6 201 090, the disclosure in which is incorporated herein by way of this reference.

This prior specification discloses the construction of a termite barrier and the application thereof to buildings incorporating or supported on a concrete slab and wherein the termite control is achieved without the use of harmful chemicals which are currently deemed environmentally unacceptable. More specifically, there is disclosed in that prior application, a termite barrier material comprising a mesh sheet of a material resistant to breakdown in the environment of use and substantially resistant to termite secretions and has a hardness of not less than about Shore D70, the pores of said mesh having a linear dimension in any direction less than the maximum linear dimension of the cross section of the head of the species of termite to be controlled. The above defined termite barrier material shall be referred to hereinafter as " the termite barrier material".

In the prior patent specification, it has been proposed to underlay the concrete slab with a continuous layer of the termite barrier material. However, in view of the strength of concrete slabs and the low probability of cracking thereof, the technique of underlaying the full extent of the concrete slab with the termite barrier material, involves a substantial waste of the barrier material and a consequential increase in the cost of providing the protection against the intrusion of termites.

Accordingly, it is the object of the present invention to enable a building or like structure to be protected against the entry of termites using the termite barrier material, but in a more economic manner without seriously impairing the effectiveness of the barrier against the entry of termites to the building.

With the above stated object in view, there is provided according to one aspect of the invention a combination of a building structure and termite barrier material, the combination being as claimed in the ensuing claim 1 and, according to another aspect of the invention, a combination of a building structure and termite barrier material, the combination being as claimed in the ensuing claim 2.

According to another aspect of the invention a method of installing the termite barrier is also provided.

Conveniently, the adjacent structure may be a further concrete slab which can either be a lateral extension of the existing slab, or a vertical extension thereof such as a wall. Further, the adjacent structure may be a concrete beam or like structural member upon which a building or other structure is to be supported.

It is to be understood that termites that attack buildings are nearly always of the subterranean variety and cannot survive unless protected from direct exposure to ambient conditions including sunlight and thus, in the majority of environments, they cannot travel over the exposed surface of a component of the building and thus, it is only necessary to maintain the integrity of the termite barrier to a limited height above ground level. It is acknowledged the such termite can travel a considerable distance over external surfaces, but only by first building a gallery or "mud tube" over the external surface through which the termites can travel protected from ambient conditions. However the provision of the strip of termite barrier cause the termites to build a gallery further up the wall of the building thereby rendering easy detection of the presence of termites.

One or both marginal edge portions of the strip of termite barrier material may be adhesively bonded in position. In the case where only one marginal edge portion is bonded in position, the other marginal edge portion may be integrally secured in some other fashion.

Where the slab and the adjacent structure are each cast in-situ concrete components, such as in construction and control joints, it may be convenient for one of the marginal edge portions of the termite barrier strip to be embedded in the slab or the adjacent structure during the pouring of the concrete instead of being adhered thereto. In other structures, where both of the adjacent concrete components are precast, it may be convenient for each marginal edge portion of the strip of termite barrier material to be bonded to the respective concrete structures, such as by a suitable adhesive or bonding material which itself is resistant to attack by termites.

Preferably during such an installation, the marginal edge portions of the termite barrier strip are secured at spaced intervals along the length of the joint by a mechanical connection, such as by concrete nails, and the adhesive or bonding material subsequently applied or applied in a combined operation with the application of the nails or fastenings. The use of the mechanical fastening is principally for the purpose of ensuring the marginal edge portion of the termite barrier strip is held in the correct location and in intimate contact with the slab or other structure while the adhesive or bonding material is applied and cures.

Preferably, the strip of termite barrier material has a re-entrant fold extending the length of the strip and located between the marginal edge portions that are secured to the slab and adjacent structure respectively. This fold provides an enhanced level of stretchability and flexibility of the strip to accommodate movement, between the slab and/or the adjacent structure after installation of the barrier strip, without risk of damage to the attachment of the marginal portions of the barrier strip to the slab and adjacent structure respectively. This construction is particularly suitable where the barrier strip may be provided to interconnect two sections of a structure having an expansion of control joint therebetween as is commonly required in concrete buildings or structures.

The invention will be more fully understood from the following description of a number of practical applications of the termite barrier material as illustrated in the accompanying drawings.

In the drawings,

Figure 1 shows diagrammatically the installation of a termite barrier in a structure having separately formed floor and wall sections.

Figure 2 shows diagrammatically the installation of a termite barrier between an existing structure and a structure under construction.

Figure 3 shows diagrammatically the installation of a termite barrier in an existing structure having existing floor and wall components.

Figure 4 shows diagrammatically the installation of a termite barrier between laterally adjacent structures.

Figure 5 shows diagrammatically the installation of a termite barrier about a conduit extending through a concrete slab.

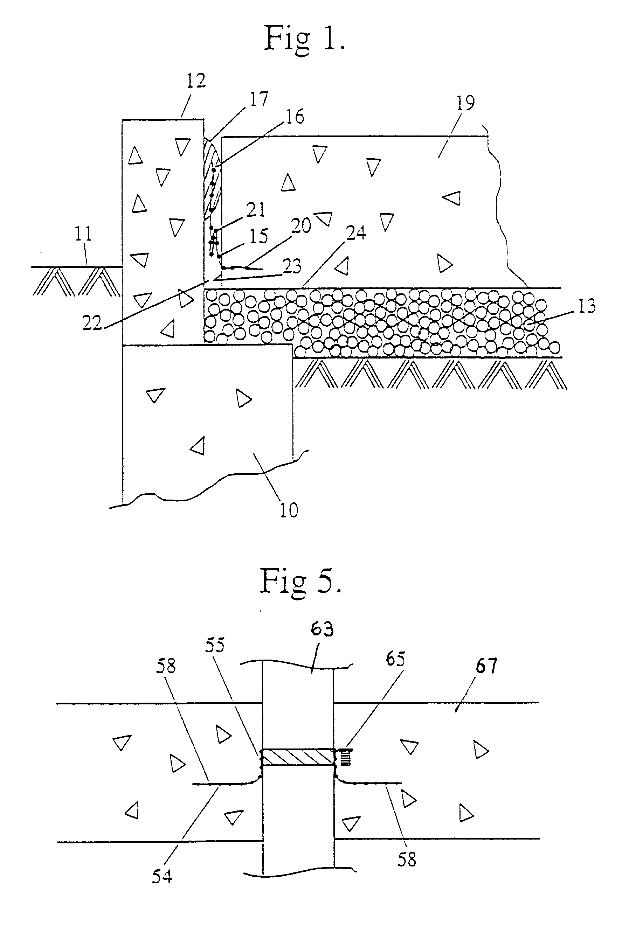

Referring now to Figure 1 of the drawings, there is shown in a simplified representation, a cross section through part of the footing, base slab and wall of a building at the junction thereof. The footing 10 is constructed of concrete, with appropriate metal reinforcement, and is located some distance below the normal surface of the ground indicated at 11. The concrete beam 12 can be cast insitu or precast, and is located in position on the footing 10, a series of such beams being provided to form the perimeter of the base of the building. As the beams 12 can be precast and subsequently transported to the building site, it is not servicable to have a portion of the strip of termite barrier material embedded in the beam during the casting thereof, particularly in view of the possibility of damage to the barrier material during subsequent transportation and installation of the beams.

Following completion of the erection of the perimeter beams upon the footings, the area bounded by the series of beams is prepared for pouring of the concrete slab by the laying down and compacting of a bed of stones as indicated at 13. Also prior to pouring of the slab, a continuous strip 15 of the termite barrier material has one marginal edge portion 16 applied to the internal face of the beam 12 by a layer of adhesive, e.g. by being embedded in an adhesive bulbous lateral projection 17, and possibly supplemented by appropriate mechanical fixings such as concrete nails. After curing of the adhesive cement, the concrete floor slab 19 is poured and during such pouring the other marginal edge portion 20 of the barrier strip is embedded in the concrete slab 19.

The concrete of the slab may extend up to and abut the internal face of the beams 12, thereby also encasing the marginal portion 16 of the termite barrier strip that is adhered to the beam 12. Alternatively, an expansion gap, as indicated at 22, is left between the perimeter edge of the slab 19 and the opposite face of the adjacent beam 12. Where such an expansion gap is left, as seen in Figure 1, the termite barrier strip is provided with a re-entrant fold 21 extending the length thereof to provide flexibility and freedom for movement of the floor slab relative to the beams without the risk of fracture of the termite barrier strip.

As shown in Figure 1, the marginal edge portion 20 extends into the slab through the edge face 23 thereof. However, it is to be understood that the termite barrier strip may also extend to the underside of the slab with the marginal portion then projecting upwardly into the under side 24 of the slab 19.

It is also to be understood that the beam 12 as shown in Figure 1 can be replaced by a cast in-situ or precast wall or similar upwardly extending member. In such an arrangement the termite barrier strip 15 can be installed as shown in Figure 1 or each marginal edge portion of the strip 15 can be adhered or bonded to both the slab 19 and the upwardly extending member.

The above description of the installation of the termite barrier strip between a beam or wall and a slab may also be applied to providing an effective termite barrier between an existing concrete member and a newly cast member which may be functioning as an extension of an existing structure. In such circumstances, the same technique and layout as above discussed with respect to the beam and slab, may be applied to extending an existing slab.

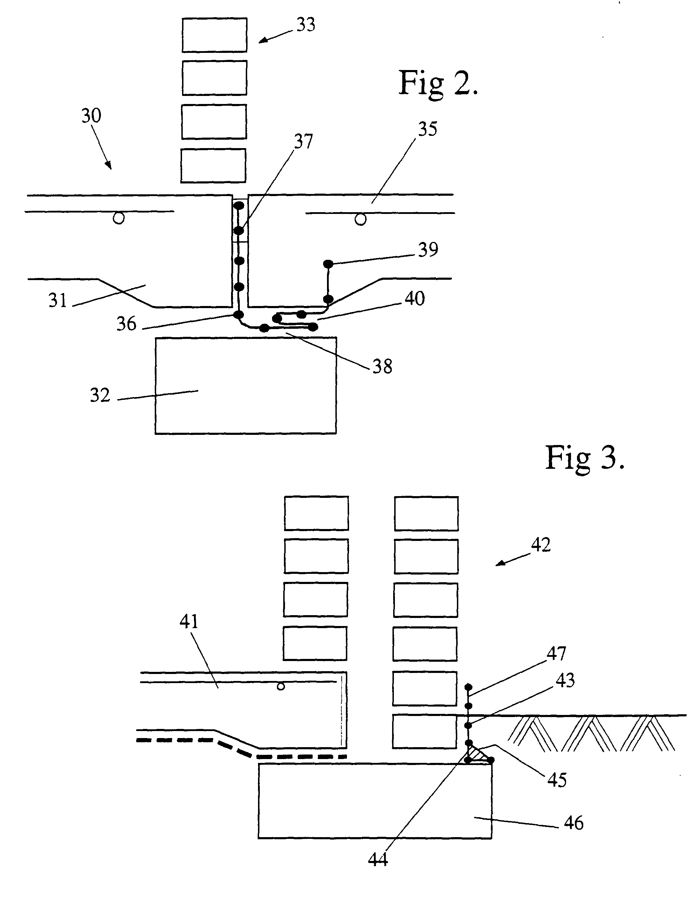

One example of such an application of the termite barrier material is illustrated in Figure 2 wherein an existing structure 30 is depicted as a floor slab 31 supported on a footing 32 and supporting a wall 33, is extended by a further floor slab 35. In Figure 2, the footing 32 is shown displaced downward from the slabs 31 and 35 for convenience of illustration, however it will be understood that the perimeter of the slabs set on the footing is in the conventional manner.

Prior to pouring the further slab 35, the strip 36 of termite barrier material is positioned to extend along the length of the vertical edge face of the existing slab 31 so that when the further slab 35 is poured, or positioned on the footing, the portion 37 of the barrier strip is located therebetween. Also, prior to the pouring of the further slab 35, the remainder portion 38 of the barrier strip is located on the top of the footing 32 where the further slab is to be poured. This remaining portion 38 of the barrier strip is formed to provide an anchor portion 39 and the fold portion 40. The anchor portion 39 is upstanding from the footing to generally extend upward and be embedded in the further slab 35 when poured to provide a sealed connection therebetween. Prior to the positioning of the further slab 35, an adhesive mixture is applied to the portion 37 of the barrier strip to secure and seal the portion of the barrier strip to the existing slab.

The fold portion 40 provides for limited movement between the two slabs 31 and 35 without over stressing of the barrier strip to an extent to fracture the strip. A sheet of thin plastic or low friction material is placed over the re-enterant fold 40 to assist in movement between the slab and the re-enterant fold of barrier strip and to protect the strip in the event of such movement.

Although the description in respect to Figure 2 specifically refers to forming a termite barrier between an existing slab or a newly poured slab, the same form of termite barrier can be constructed between other structural components where one exists and the other is newly constructed. By way of example, the barrier construction can be employed between a slab and a wall, between two parallel walls, between two intersecting walls, and between any two adjacent structural components or structures.

Referring now to Figure 3 of the drawings there is illustrated a further application of the termite barrier strip along the external perimeter wall of an existing building. In this situation, the existing building comprises a conventional poured concrete footing 46, a floor slab 41, and an external wall 42 which may be in the form of a brick, block or poured concrete construction. In such an existing structure, there is no convenient access to the underside of the slab 41 or the interface between the slab and the wall 42 and accordingly, it is necessary to install the termite barrier strip externally.

This is achieved by initially removing the earth adjacent the external wall to a depth to expose the existing concrete footing 46 and then apply the termite barrier strip 43 extending up the external face of the wall 42 from the footing 46 to a substantial distance above the normal surrounding ground level. The lower marginal edge portion 44 of the termite barrier strip, is seated on the footing 46, and secured to the footing and the lower portion of the external face of the wall 42 by suitable adhesive as indicated at 45. The upper marginal portion 47 of the termite barrier strip 43 is secured to the blocks of the wall 44 by the use of adhesive cement or mortar alone or together with concrete nails at suitable intervals along its length.

It is to be noted that, in view of the inability of the termites to survive when exposed to ambient conditions, it is only necessary for the barrier strip to extend approximately 100 to 200 millimetres above normal ground level to provide an effective barrier to prevent termites entering the building or to cause them to build external galleries that are readily visible and hence the presence of termites is detectable.

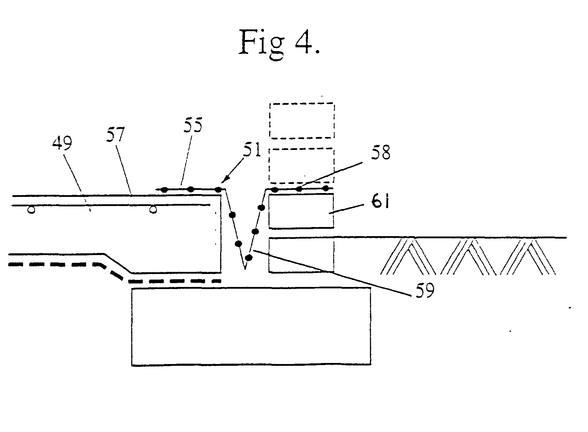

There is shown in Figure 4 an alternative construction to that shown in Figure 1 which is suitable for use during the construction of the building as compared with that shown in Figure 3 which is more appropriate for application to existing buildings. In Figure 4, the barrier strip 51 is installed after the slab 49 has been constructed and during erection of a brick wall 61.

As shown in Figure 4, one marginal edge portion 55 of the termite barrier strip 59 is adhesively secured to the top face 57 of the slab 49. The opposite marginal edge portion 58 is positioned between two adjacent layers of the bricks or blocks of the wall 61 with the normal mortar or cement located on either side of the marginal edge portion 58. As shown in Figure 4, the portion of the barrier strip 59 spanning the space between the slab and the wall is in a folded form to accommodate movement between the wall and the slab without strain or the risk of fracture of the barrier strip.

In the previous description of the practical application of the present invention, reference has been made to using adhesive cement to adhesively bond a marginal edge portion of the barrier strip to an adjacent member which may be concrete or building bricks or blocks. The nature of the adhesive cement may be a mixture of conventional cement and fine sized sand and to which there is added a proprietary cement adhesive agent. Preferably the cement adhesive is synthetic polymer based. The sand used in the adhesive cement is selected so that it is sufficiently fine that the individual particles will freely pass through the openings in the mesh of the barrier strip. This ensures an effective bond between the barrier strip and the adjacent structural member, and to prevent the possible formation of areas which are not adhered and therefore potential passages for termites. The cement mix should have a high cement content preferably of the order of 2 to 3 parts sand to one part cement.

It is frequently necessary in building structures to provide conduits, such as water or waste pipes, which project through the ground slab of the structure, and the opening provided in the slab for this purpose is a potential avenue for the passage of termites. Referring now to Figure 5, in order to preclude the passage of termites, it is proposed that a sheet 54 of barrier material with a central aperture of lesser diameter than the conduit 63. Prior to the pouring of the slab, the aperture portion is stretched to increase the diameter of the aperture to form a sleeve 55 to receive the conduit 63. The sleeve 55 is fitted to the conduit 63 and clamped about the exterior thereof such as by a conventional stainless steel hose clip 65. During the subsequent pouring of the slab 67, the outer perimeter area 58 of the sheet of termite barrier material is embedded in the concrete and thereby provide an effective barrier to the passage of termites between the conduit 63 and the slab 56.

In a modification of the termite barrier installation shown in Figure 3 the termite barrier strip 43 is folded along a longitudinal line so that the two marginal edges thereof overlay and both edges are located between the footing 46 and the lower brick or block of the wall 42. The edges of the barrier strip are embedded in the mortar to secure it in place before the bricks or blocks are erected. The folded portion of the strip projects laterally from the wall and is contoured to form an open bulbous shape that is relatively flexible and porous to water and will thus not support a termite gallery.

The termite barrier material and installations thereof as previously described with reference to the accompanying drawings may be used in many other applications where the passage of termites is required to be prevented without departing from the present invention.

## Claims

1. A combination of a building structure incorporating at or adjacent ground level two non-integral adjacent termite resistant structural sections and termite barrier material which is resistant to breakdown in the environment of use and substantially resistant to termite secretions, has a hardness of not less than about Shore D70 for resistance to termite chewing and is perforated with pores each of which has a linear dimension in all directions less than the maximum linear dimension of the cross section of the head of the species of termite to be controlled, **characterised in that** the termite barrier material is in strip form having respective opposite longitudinal marginal edge portions (16,20) which are integrally secured to the respective structural sections (12,19) against the passage of termites therebetween, at least one of the longitudinal marginal edge portions (16,20) being adhesively bonded to the respective structural section (12,19) to provide a termite impervious connection therebetween.

2. A combination of a building structure incorporating a ground level or near ground level concrete structure and having a non-integral termite resistant adjacent structure and termite barrier material which is resistant to breakdown in the environment of use and substantially resistant to termite secretions, has a hardness of not less than about Shore D70 for resistance to termite chewing and is perforated with pores each of which has a linear dimension in all directions less than the maximum linear dimension of the cross section of the head of the species of termite to be controlled, **characterised in that** the termite barrier material is in strip form having respective opposite longitudinal marginal edge portions (16,20) which are integrally secured to the concrete structure (19) and the adjacent structure (12) to establish integrity of the connection between the concrete structure (19) and the adjacent structure (1 2)against the passage of termites, the strip form termite barrier material being integrally secured to the concrete structure and/or to the adjacent structure by being adhesively bonded thereto to provide a termite impervious connection therebetween.

3. A combination according to claim 2, wherein the adjacent structure (12) is a lateral or vertical extension of the concrete structure (19).

4. A combination according to claim 2, wherein the adjacent structure (12) is an upstanding wall or structure.

5. A combination according to claim 2, wherein the adjacent structure (12) is a wall spaced laterally from the concrete structure (19).

6. A combination according to claim 2, wherein the adjacent structure (12) is a wall upstanding from the concrete structure (19).

7. A combination according to any one of claims 2 to 6, wherein the termite barrier material (15) has between its respective longitudinal marginal edge portions (16,20) a re-entrant fold (21) extending longitudinally thereof.

8. A combination according to claim 2, further **characterised in that** a member (63) projects through the concrete structure (19), and in that a sleeve portion (55) of the termite barrier material is located about the periphery of the member (63) and is clamped in pressure engagement therewith about the complete perimeter of the member (63), an integral flange (58) of said termite barrier material projecting from said sleeve portion (55) being sealably embedded in said concrete structure (19).

9. A combination according to claim 2, wherein one of the said longitudinal marginal edge portions (16,20) is secured to its associated structure (12,19) in sealed relation thereto by means of an adhesive bulbous lateral projection (17) extending from the associated structure (12,19).

10. A method of installation of a termite barrier in a building structure incorporating a concrete structure at or near ground level and having a non-integral termite resistant adjacent structure, said termite barrier comprising termite barrier material which is resistant to breakdown in the environment of use and substantially resistant to termite secretions, has a hardness of not less than about Shore D70 for resistance to termite chewing and is perforated with pores each of which has a linear dimension in all directions less than the maximum linear dimension of the cross section of the head of the species of termite to be controlled, **characterised in that** the termite barrier material is in strip form having respective opposite longitudinal marginal edge portions (16,20) in that said method comprises the steps of integrally securing one of said longitudinal marginal edge portions (20) to the concrete structure (19) and integrally securing the other of said longitudinal marginal edge portions (16) to the adjacent structure (12) whereby the termite barrier material (15) provides integrity between the concrete structure (19) and the adjacent structure (12) against the passage of termites, and in that the strip form termite barrier material is integrally secured to the concrete structure (19) and/or to the adjacent structure (12) by being adhesively bonded thereto to provide a termite impervious connection therebetween.

11. A method according to claim 10, wherein the concrete structure (19) comprises a slab.

12. A method according to claim 11, further **characterised in that** the slab (19) is cast in situ and wherein the strip form termite barrier material (15) is integrally secured to the slab (19) by embedding the respective marginal edge portion thereof (20) into the slab (15) during casting thereof.

13. A method according to claim 10, further **characterised in that** the adjacent structure (12) is cast in-situ and wherein the associated marginal edge portion (16) is embedded into the adjacent structure during casting thereof.

14. A method according to claim 10, further **characterised in that** the adjacent structure (12) comprises a wall (50) of brick construction and that associated marginal edge portion (16) of the strip form termite barrier material (15) is embedded in the wall between two layers of bricks (61) in the wall.

## Patentansprüche

1. Kombination einer Gebäudeanordnung mit zwei nicht integralen benachbarten termitenresistenten Gebäudestrukturen auf Bodenhöhe oder fast auf Bodenhöhe, und Termitenschutzmaterial, das gegen Abbau im zutreffenden Umfeld widerstandsfähig und gegen die Ausscheidungen von Termiten im wesentlichen widerstandsfähig ist, eine Härte von mindestens Shore D70 aufweist und gegen Termitenbisse resistent ist, und mit Poren perforiert ist, die jeweils eine lineare Abmessung in allen Richtungen aufweisen, die geringer ist als die maximale lineare Abmessung des Querschnitts des Kopfes der zu kontrollierenden Termitenspezies, **dadurch gekennzeichnet**, dass das Termitenschutzmaterial in Form von Streifen vorliegt, die jeweils sich gegenüberliegende Längskantenabschnitte (16, 20) aufweisen, die integral an den entsprechenden Gebäudestrukturen (12, 19) befestigt sind, um den Durchgang von Termiten dazwischen zu verhindern, wobei mindestens einer der Längskantenabschnitte (16, 20) mit der entsprechenden Gebäudestruktur (12, 19) verklebt ist, um eine für Termiten undurchlässige Verbindung dazwischen zu schaffen.

2. Kombination einer Gebäudeanordnung mit einer Betonstruktur in Bodenhöhe oder fast in Bodenhöhe und einer nicht integralen termitenresistenten benachbarten Struktur und Termitenschutzmaterial, das gegen Abbau im zutreffenden Umfeld widerstandsfähig und gegen die Ausscheidungen von Termiten im wesentlichen widerstandsfähig ist, eine Härte von mindestens Shore D70 aufweist und gegen Termitenbisse resistent ist, und mit Poren perforiert ist, die jeweils eine lineare Abmessung in allen Richtungen aufweisen, die geringer ist als die maximale lineare Abmessung des Querschnitts des Kopfes der zu kontrollierenden Termitenspezies, **dadurch gekennzeichnet**, dass das Termitenschutzmaterial in Form von Streifen vorliegt, die jeweils sich gegenüberliegende Längskantenabschnitte (16, 20) aufweisen, die integral an der Betonstruktur (19) und der benachbarten Struktur (12) befestigt sind, um eine feste Verbindung zwischen der Betonstruktur (19) und der benachbarten Struktur (12) zur Unterbindung des Durchgangs von Termiten zu schaffen, wobei das streifenförmige Termitenschutzmaterial durch Verkleben integral an der Betonstruktur und/oder der benachbarten Struktur befestigt ist, um eine für Termiten undurchlässige Verbindung dazwischen zu schaffen.

3. Kombination gemäß Anspruch 2, worin die benachbarte Struktur (12) ein seitlicher oder vertikaler Anbau der Betonstruktur (19) ist.

4. Kombination gemäß Anspruch 2, worin die benachbarte Struktur (12) eine aufrechte Wand oder Struktur ist.

5. Kombination gemäß Anspruch 2, worin die benachbarte Struktur (12) eine Wand ist, die seitlich von der Betonstruktur (19) beabstandet ist.

6. Kombination gemäß Anspruch 2, worin die benachbarte Struktur (12) eine auf der Betonstruktur (19) errichtete Wand ist.

7. Kombination gemäß einem der Ansprüche 2 bis 6, worin das Termitenschutzmaterial (15) zwischen seinen jeweiligen Längskantenabschnitten (16, 20) eine sich in Längsrichtung dazu erstreckende in sich zurückkehrende Falte (21) aufweist.

8. Kombination gemäß Anspruch 2, weiterhin **dadurch gekennzeichnet**, dass ein Glied (63) durch die Betonstruktur (19) vorsteht und dass ein Hülsenteil (55) des Termitenschutzmaterials um den Umfang des Glieds (63) herum angeordnet ist und in Druckeingriff damit um den gesamten Umfang des Glieds (63) festgeklemmt ist, wobei ein integraler, aus dem Hülsenteil (55) hervorstehender Flansch (58) des Termitenschutzmaterials dichtend in der Betonstruktur (19) eingebettet ist.

9. Kombination nach Anspruch 2, worin einer der Längskantenabschnitte (16, 20) an seiner ihm zugeordneten Struktur (12, 19) über einen klebenden, kugelförmigen seitlichen Vorsprung (17), der sich aus der zugeordneten Struktur (12, 19) erstreckt, dichtend befestigt ist.

10. Verfahren zur Installation einer Termitenbarriere in einer Gebäudestruktur mit einer Betonstruktur in Bodenhöhe oder fast in Bodenhöhe und einer nicht integralen termitenresistenten benachbarten Struktur, wobei diese Termitenbarriere ein Termitenschutzmaterial umfasst, das gegen Abbau im zutreffenden Umfeld widerstandsfähig und gegen die Ausscheidungen von Termiten im wesentlichen widerstandsfähig ist, eine Härte von mindestens Shore D70 aufweist und gegen Termitenbisse resistent ist, und mit Poren perforiert ist, die jeweils eine lineare Abmessung in allen Richtungen aufweisen, die geringer ist als die maximale lineare Abmessung des Querschnitts des Kopfes der zu kontrollierenden Termitenspezies, **dadurch gekennzeichnet**, dass das Termitenschutzmaterial in Form von Streifen vorliegt, die jeweils sich gegenüberliegende Längskantenabschnitte (16, 20) aufweisen, dass dieses Verfahren die Schritte der integralen Befestigung eines der Längskantenabschnitte (20) an der Betonstruktur (19) und der integralen Befestigung des anderen Längskantenabschnitts (16) an der benachbarten Struktur (12) umfasst, wobei das Termitenschutzmaterial (15) für Integrität zwischen der Betonstruktur (19) und der benachbarten Struktur (12) zum Schutz gegen den Durchgang von Termiten sorgt, und dass das streifenförmige Termitenschutzmaterial durch Verkleben integral an der Betonstruktur (19) und/oder der benachbarten Struktur (12) befestigt ist, um eine für Termiten undurchlässige Verbindung dazwischen zu schaffen.

11. Verfahren nach Anspruch 10, worin die Betonstruktur (19) eine Platte umfasst.

12. Verfahren nach Anspruch 11, weiterhin **dadurch gekennzeichnet**, dass die Platte (19) in situ gegossen ist, und worin das streifenförmige Termitenschutzmaterial (15) durch Einbetten des jeweiligen Längskantenabschnitts (20) in die Platte (15) beim Gießen integral an der Platte (19) befestigt ist.

13. Verfahren nach Anspruch 10, weiterhin **dadurch gekennzeichnet**, dass die benachbarte Struktur (12) in situ gegossen ist, und worin der zugeordnete Längskantenabschnitt (16) in die benachbarte Struktur beim Gießen eingebettet wird.

14. Verfahren nach Anspruch 10, weiterhin **dadurch gekennzeichnet**, dass die benachbarte Struktur (12) eine Wand (50) aus einer Ziegelanordnung umfasst und dass der zugeordnete Längskantenabschnitt (16) des streifenförmigen Termitenschutzmaterials (15) in der Wand zwischen den beiden Ziegelschichten (61) in der Wand eingebettet ist.

## Revendications

1. Combinaison d'une structure de bâtiment incorporant, au niveau du sol ou à proximité du niveau du sol, deux sections structurelles adjacentes non intégrées résistant aux termites, et d'un matériau formant une barrière contre les termites, qui est résistant à la décomposition dans l'environnement d'utilisation et substantiellement résistant aux sécrétions des termites, qui a une dureté non inférieure à environ Shore D70 pour résister aux morsures des termites, et qui est pourvu de pores ayant chacun une dimension linéaire dans toutes les directions inférieure à la dimension linéaire maximale de la section transversale de la tête de l'espèce de termites contre laquelle on souhaite lutter, **caractérisée en ce que** le matériau formant une barrière contre les termites se présente sous forme de bandes ayant des portions de bord marginales longitudinales opposées respectives (16, 20) qui sont fixées intégralement aux sections structurelles respectives (12, 19) pour empêcher le passage des termites entre elles, au moins l'une des portions de bord marginales longitudinales (16, 20) étant collée à la section structurelle respective (12, 19) pour fournir entre elles une connexion hermétique aux termites.

2. Combinaison d'une structure de bâtiment incorporant une structure en béton au niveau du sol ou à proximité du niveau du sol et ayant une structure adjacente non intégrée résistant aux termites, et d'un matériau formant une barrière contre les termites, qui est résistant à la décomposition dans l'environnement d'utilisation et substantiellement résistant aux sécrétions des termites, qui a une dureté non inférieure à environ Shore D70 pour résister aux morsures des termites, et qui est pourvu de pores ayant chacun une dimension linéaire dans toutes les directions inférieure à la dimension linéaire maximale de la section transversale de la tête de l'espèce de termites contre laquelle on souhaite lutter, **caractérisée en ce que** le matériau formant une barrière contre les termites se présente sous forme de bandes ayant des portions de bord marginales longitudinales opposées respectives (16, 20) qui sont fixées intégralement à la structure en béton (19) et à la structure adjacente (12) pour établir l'intégrité de la connexion entre la structure en béton (19) et la structure adjacente (12) contre le passage des termites, le matériau en forme de bandes formant une barrière contre les termites étant fixé intégralement à la structure en béton et/ou à la structure adjacente par collage à celle-ci pour fournir entre elles une connexion hermétique aux termites.

3. Combinaison selon la revendication 2, dans laquelle la structure adjacente (12) est une prolongation latérale ou verticale de la structure en béton (19).

4. Combinaison selon la revendication 2, dans laquelle la structure adjacente (12) est une paroi ou structure verticale.

5. Combinaison selon la revendication 2, dans laquelle la structure adjacente (12) est une paroi espacée latéralement de la structure en béton (19).

6. Combinaison selon la revendication 2, dans laquelle la structure adjacente (12) est une paroi verticale partant de la structure en béton (19).

7. Combinaison selon l'une quelconque des revendications 2 à 6, dans laquelle le matériau formant une barrière contre les termites (15) présente, entre ses portions de bord marginales longitudinales respectives (16, 20), un pli rentrant (21) s'étendant longitudinalement par rapport à celles-ci.

8. Combinaison selon la revendication 2, caractérisée en outre en ce qu'un organe (63) fait saillie à travers la structure en béton (19), et en ce qu'une portion de manchon (55) du matériau formant une barrière contre les termites est située autour de la périphérie de l'organe (63) et est serrée par engagement sous pression avec celui-ci autour du périmètre complet de l'organe (63), une bride intégrée (58) dudit matériau formant une barrière contre les termites, saillant depuis ladite portion de manchon (55), étant noyée de manière hermétique dans ladite structure en béton (19) .

9. Combinaison selon la revendication 2, dans laquelle l'une desdites portions de bord marginales longitudinales (16, 20) est fixée à sa structure associée (12, 19) en relation hermétique par rapport à celle-ci, au moyen d'une saillie latérale adhésive bulbeuse (17) s'étendant depuis la structure associée (12, 19).

10. Procédé d'installation d'une barrière contre les termites dans une structure de bâtiment incorporant une structure en béton au niveau du sol ou à proximité du niveau du sol et ayant une structure adjacente non intégrée résistant aux termites, ladite barrière contre les termites comprenant un matériau formant une barrière contre les termites qui est résistant à la décomposition dans l'environnement d'utilisation et substantiellement résistant aux sécrétions des termites, qui a une dureté non inférieure à environ Shore D70 pour résister aux morsures des termites, et qui est pourvu de pores ayant chacun une dimension linéaire dans toutes les directions inférieure à la dimension linéaire maximale de la section transversale de la tête de l'espèce de termites contre laquelle on souhaite lutter, **caractérisé en ce que** le matériau formant une barrière contre les termites se présente sous forme de bandes ayant des portions de bord marginales longitudinales opposées respectives (16, 20), en ce que ledit procédé comprend les étapes consistant à fixer intégralement l'une desdites portions de bord marginales longitudinales (20) à la structure en béton (19) et à fixer intégralement l'autre desdites portions de bord marginales longitudinales (16) a la structure adjacente (12), le matériau formant une barrière contre les termites (15) fournissant ainsi l'intégrité entre la structure en béton (19) et la structure adjacente (12) contre le passage des termites, et en ce que le matériau en forme de bandes formant une barrière contre les termites est fixé intégralement à la structure en béton (19) et/ou à la structure adjacente (12) par collage à celle-ci pour fournir entre elles une connexion hermétique aux termites.

11. Procédé selon la revendication 10, dans lequel la structure en béton (19) comprend une dalle.

12. Procédé selon la revendication 11, caractérisé en outre en ce que la dalle (19) est coulée sur place, et dans lequel le matériau en forme de bandes formant une barrière contre les termites (15) est fixé intégralement à la dalle (19) par noyage de sa portion de bord marginale respective (20) dans la dalle (15) au cours de son coulage.

13. Procédé selon la revendication 10, caractérisé en outre en ce que la structure adjacente (12) est coulée sur place, et dans lequel la portion de bord marginale associée (16) est noyée dans la structure adjacente au cours de son coulage.

14. Procédé selon la revendication 10, caractérisé en outre en ce que la structure adjacente (12) comprend une paroi (50) de construction en briques et en ce que la portion de bord marginale associée (16) du matériau en forme de bandes formant une barrière contre les termites (15) est noyée dans la paroi entre deux couches de briques (61) dans la paroi.
